# EUROPÄISCHE PATENTSCHRIFT

(11) **EP 0 550 800 B1**
(45) Veröffentlichungstag und Bekanntmachung des Hinweises auf die Patenterteilung: **09.04.1997**
(21) Anmeldenummer: 92117157.5
(22) Anmeldetag: 08.10.1992
(51) Int. Cl.: B29B 17/00, B29C 47/06

(54) **Formteil**
Molded product
Produit moulé

(30) Priorität: 10.01.1992 DE 4200400; 20.04.1992 DE 4213951
(43) Veröffentlichungstag der Anmeldung: 14.07.1993
(73) Patentinhaber: BEYER INDUSTRIEPRODUKTE GmbH &Co. KG, D-52372 Kreuzau (DE)
(72) Erfinder: Beyer, Dieter, W-5166 Kreuzau-Stockheim (DE)
(74) Vertreter: Castell, Klaus, Dr.-Ing.

(56) Entgegenhaltungen:
- EP-A- 0 334 420
- DD-A- 233 525
- DE-A- 2 558 987
- DE-A- 3 939 189
- FR-A- 2 648 371
- TENNER 'Verwerten van Thermoplastischen Kunststoffabfällen' 1979 , VDI- GESELLSCHAFT KUNSTSTOFFTECHNIK , DüSSELDORF Aufbereitung von Thermoplastischen Abfällen in der Schmelze

## Beschreibung

Die FR-A-2648371 offenbart in Figur 3 ein Formteil, bei dem die äußere Oberfläche durch eine Kunststoffhaut gebildet ist, welche einen mit zerkleinerten Füllstoffen und Kunststoff gefüllten Raum umschließt. Diese Formteile haben aber für viele praktische Einsatzbereiche eine zu geringe Festigkeit.

Der Erfindung liegt daher die Aufgabe zugrunde, ein Formteil mit einer geschlossenen Außenhaut aus Kunststoff vorzuschlagen, das besonders fest ist.

Diese Aufgabe wird mit einem Formteil mit den Merkmalen des Patentanspruchs 1 gelöst.

Vorteilhafte Ausgestaltungen des Formteile ergeben sich aus den Unteransprüchen.

Zur Herstellung des erfindungsgem. Formteils können die ungereinigten Alt-Kunststoffe und Füllstoffe ohne weitere Aufbereitung z. B. dem getrennten Hausmüll entnommen werden, der bestehen kann aus beliebigen Kunststoffen wie, z. B. Kunststoff-Tüten, aber auch zusätzlich aus beliebigen Verbundstoffen, die Kunststoff enthalten, wie z. B. kunststoffbeschichtete und aluminiumbeschichtete bzw. zusätzlich papierbeschichtete Flüssigkeitsbehälter sowie sonstigen zellulosehaltigen Stoffen, wie Papier oder Pappe. Es können auch nicht-thermoplastische Kunststoffe und sogar Metallteile, wie z. B. metallene Getränkedosen, enthalten sein, wobei dies alles in der im Hausmüll typischerweise auftretenden Verteilung anfallen kann. Dieses z. B. dem Hausmüll entstammende Gemenge kann ohne weitere Vorbehandlung unmittelbar zerkleinert und in zerkleinerter Form einem Extruder zugeführt werden. Im Extruder schmelzen die thermoplastischen Bestandteile auf und umhüllen die nicht schmelzbaren Bestandteile, auch soweit es sich dabei um Duroplaste, Metalle oder Zellulosefasern handelt. Erfahrungsgemäß ist in dem Gemenge immer ein Bestandteil von etwa 1 % PVC enthalten, wodurch zunächst zu erwarten gewesen wäre, daß während der Verarbeitung im Extruder giftige Chlorgase entstehen und entweichen. Die Erfahrung zeigt jedoch, daß keinerlei Chlorgase austreten, da diese offenbar bereits mit oder vor ihrem Entstehen von den bereits breiig oder flüssig gewordenen Kunststoffanteilen gefangen und eingeschlossen werden.

Die beschriebene Lösung erlaubt somit die Verwendung von minderwertigsten Abfällen, aus denen ein hochwertiges Produkt mit ausgezeichneten Festigkeitseigenschaften hergestellt werden kann. Die Abfallkunststoffe werden unsortiert und mit daran anhaftenden Verbundstoffen, wie z. B. Aluminiumfolie oder Papier, einschl. weiterer darin enthaltener Abfallstoffe ohne weiteren Trennvorgang einfach zerkleinert und ungetrennt und unsortiert in den Extruder gegeben. Verblüffenderweise kann hierbei festgestellt werden, daß sich eine geschlossene Außenhaut aus Kunststoff ohne Beimischungen bildet, während alle Füllstoffe und Abfallstoffe, wie z. B. die am Altkunststoff anhaftenden Verbundstoffe, nach innen wandern und dort Partikel für Partikel vollständig von Kunststoff umgeben sind. Die Füllstoffe können hierbei vorzugsweise einen Anteil von 50 Gewichtsprozent annehmen. Die zerkleinerten Füllstoffe werden alle in das Innere des hergestellten Formteils gedrängt und dort nicht etwa in ihrer Gesamtheit sondern partikelweise mit Kunststoff umhüllt. Der breiige Kunststoff verbindet sich hierbei auch untereinander und verbindet sich ebenfalls mit der äußeren Kunststoffhaut, in der keine Füllstoffe vorhanden sind. Diese äußere Kunststoffhaut ist mehr als 1 mm dick. Es entsteht hierdurch ein sehr festes Formteil, das nur in außerordentlich geringem Maße Wasser aufnimmt. Aufgrund der geringen Wasseraufnahmefähigkeit tritt auch, im Gegensatz zu sonstigen Kunststoffteilen keine Quellung im Wasser auf.

Eine besondere Art des beschriebenen Formteils entsteht dadurch daß die breiige Masse durch die Form bei gleichen Abmessungen und zumindest annähernd gleichem Gewicht in die einem aus Ton oder tonhaltigen Massen gebrannten oder aus Beton gegossenen Dachziegel entsprechende Formgestalt gebracht wird. Hierbei kann der Druck in der zugeordneten Form vorzugsweise in der Größenordnung von 250 bar liegen. Die auf solche Art hergestellten Dachpfannen sind hochfest und aufgrund ihrer starken Pressung flammwidrig. Sie sind in ihrer Handhabung - was dem zuständigen Handwerker angenehm ist - nahezu identisch mit den bekannten Dachpfannen aus Ton oder tonhaltigen Massen oder aus gegossenem Beton. Darüber hinaus können sie jedoch beliebig eingefärbt werden und sehr leicht an Ort und Stelle zur Anpassung an örtliche Gegebenheiten mit Handarbeitsgeräten geschnitten werden, ohne daß hierbei Bruchgefahr besteht. Natürlich können solche Dachpfannen beliebig profiliert sein, z. B. in der Form von Dachplatten oder Wellplatten geformt sein, die jeweils nicht nur für eine Dachabdeckung geeignet sind. Beim Transport müssen solche Dachpfannen nicht vorsichtig gehandhabt werden, sondern können beispielsweise an der Baustelle ohne Bruchgefahr einfach abgekippt werden. Durch die Verwendung des eingangs beschriebenen minderwertigsten Abfallstoffes wird dennoch die Herstellung dieser Dachpfannen sehr billig. Es ist darüber hinaus möglich, im Verlaufe des Verfahrens zur Herstellung der Formteile Zusätze zuzugeben, die die Fertigprodukte flammwidrig machen. Ein solcher Zusatz kann z. B. Magnesiumhydroxid sein. Entsprechende Zubereitungen sind im Handel erhältlich, z. B. unter der Bezeichnung Magnifin H10 der Firma Martinswerk GmbH in 5010 Bergheim.

Eine Anlage zur Herstellung des erfindungsgemäßen Formteils zeichnet sich aus durch mindestens eine Zerkleinerungseinrichtung zur Zerkleinerung der ungereinigten Alt-Kunststoffe und der Füllstoffe, die über Transportmittel mit einem zugeordneten Extruder verbunden ist bzw. sind, der seinerseits mit einer Form zur Herstellung der Formteile verbunden ist. Die Anlage ist somit sehr einfach aufgebaut. Die Transportmittel können einfache Förderbänder sein. Im Prinzip reicht eine Zerkleinerungseinrichtung zur Zerkleinerung aus. Falls Kunststoffe mit Verbundstoffen zerkleinert werden, kann es sein, daß der Anteil der Verbundstoffe als Füllstoff bereits eine gewünschte Menge einnimmt. Falls mehr Füllstoff verwendet werden soll, ist es möglich, der Zerkleinerungseinrichtung z. B. Abfallpapiere in gewünschter Menge beizugeben. Sowohl die Abfallpapiere als auch die unsortierten Kunststoffe werden dann von der gleichen Zerkleinerungseinrichtung zerkleinert.

Es ist jedoch auch möglich eine weitere Zerkleinerungseinrichtung für solche Füllstoffe vorzusehen, die nicht als Verbundstoffe dem Kunststoff anhaften. Aus der einen oder aus beiden Zerkleinerungseinrichtungen werden dann die zerkleinerten Produkte z. B. über einfache Förderbänder dem Extruder zugeführt. Hierbei ist es auch möglich, daß die aus den Zerkleinerungseinrichtungen kommenden Produkte zunächst noch in einem Zwischenlager gespeichert werden und sodann in einem gewünschten Verhältnis über die Transporteinrichtung dem Extruder zugeführt werden. Es ist auch möglich, die zerkleinerten Kunststoffteile und und Füllstoffteile zunächst noch im gewünschten Verhältnis miteinander zu mischen und sodann erst das gemischte Produkt über die Transporteinrichtungen dem Extruder zuzuführen.

Im Extruder wird die zerkleinerte Mischung durch den Extruderdruck oder durch eine gesonderte Heizung erwärmt, wobei der Kunststoff je nach Erwärmungsgrad breiig oder flüssig wird und in dieser Form zusammen mit den eingelagerten Füllstoffpartikeln in die Form für das Formteil gepreßt wird.

Als Füllstoffe können sehr viele Stoffe verwendet werden, was schon daran zu erkennen ist, daß die unterschiedlichsten modernen Kunststoffbehälter vielerlei Verbundstoffe aufweisen, die allesamt als Füllstoff verwendet werden können. So ist auch z. B. die Verwendung von Holz als Füllstoff problemlos möglich. Wegen der vollständigen Umhüllung der zerkleinerten Holzteile mit Kunststoff kann ebenso wie Papier so auch Holz als Füllstoff kein Wasser aufnehmen. Die Art der verwendeten Füllstoffe kann jedoch die elastischen Eigenschaften und die Festigkeitseigenschaften des hergestellten Formteils in gewünschter Weise beeinflussen.

Es handelt sich hierbei um ein außerordentlich preisgünstig herstellbares Formteil, das feuchtigkeitsunempfindlich und formstabil ist und dessen elastische Eigenschaften durch die Art der gewählten Füllstoffe beeinflußbar sind.

Ein besonders günstiges Formteil, liegt vor, wenn das Formteil bei gleichen Abmessungen und zumindest annähernd gleichem Gewicht die einem aus Ton oder tonhaltigen Massen gebrannten oder aus Beton gegossenen Dachziegel entsprechende Formgestalt aufweist. Hierdurch gelingt es, aus minderwertigstem Abfallmaterial hochwertige Dachziegel herzustellen, die sich für den einschlägigen Fachmann handhaben lassen wie bekannte Dachziegel des Standes der Technik. Bekannte Dachziegel aus Ton oder Beton haben ein Gewicht zwischen 2500 und 3500 g pro Stück, welches erforderlich ist, um ein Abheben bei starkem Wind zu verhindern. Bei der erfindungsgemäßen Verarbeitung der Abfälle wird ein Gewicht der Recylingdachpfannen von mehr als 30 kg/m² erreicht, welches beim Zugrundelegen von üblichen Abmessungen von Flachdachpfannen einem Gewicht von 3800 g/Stück entspricht. Durch die Verwendung des eingangs beschriebenen Abfallgemisches ist damit ein Werkstoff gefunden worden, der vom Gewicht her vorzüglich geeignet ist, Ton und Beton als Werkstoff für Dachziegel zu ersetzen. Die Dachziegel können in den gleichen zugleich genormten Abmessungen, auch was deren Dicke betrifft, gefertigt werden, wie die Erzeugnisse aus Ton oder Beton, jedoch mit erheblich größerer Genauigkeit. Die Formmassen lassen sich darüber hinaus auch gut einfärben oder gut von außen färben, so daß man Dachziegel erhält, die vollkommen durchgefärbt sind oder von außen gefärbt sind. Sie können damit ohne Schwierigkeiten in allen modernen Farben hergestellt werden. Die nach dem erfindungsgemäßen Verfahren hergestellten, neuartigen Dachziegel haben die gleichen Abmessungen und Wellenstrukturen, wie aus Ton oder tonhaltigen Massen gebrannte oder aus Beton gegossene Dachziegel. Ihre Oberfläche kann vollkommen glatt sein, wodurch sie in ihrem Aussehen mehr in die Nähe von glasierten Dachziegeln gerückt sind. Die glatte Oberfläche hat den besonderen Vorteil, daß die erfindungsgemäßen Dachziegel frei bleiben von Bemoosung und Bewuchs.

Die durch die weiter oben beschriebenen Zusätze zur Formmasse flammwidrig eingestellten Dachziegel erfüllen die DIN 4102 für schwer entflammbare Baustoffe.

Das erfindungsgemäße Formteil führt zu sehr maß- und formgenauen Dachpfannen, so daß beim Einbau eine hohe Anlagegenauigkeit und damit eine hohe Winddichtigkeit erreicht wird. Alle Kanten und Ecken können ausreichend gerundet sein.

Die hergestellten Dachziegel können alle gängigen aber auch neue Formen aufweisen und können darüber hinaus in beliebigen Maßvarianten und auch in beliebigen Dicken hergestellt werden.

Eine Besonderheit der Dachpfanne ist noch darin zu sehen, daß die Dachpfanne an einer Seite einen sich über die ganze Länge erstreckenden Übergriff aufweist, der, beginnend am aufliegenden Ende auf der Unterseite eine sich über einen kleineren Teil der Länge der Dachpfanne erstreckende Hintergriffnase aufweist, der an der anderen Längsseite der Dachpfanne am Auflageteil für den Übergriff eine Nase entsprechender Länge zugeordnet ist. Auf diese Art und Weise können alle Dachpfannen einer Reihe beim Verlegen im Bereich ihrer Längskanten miteinander verbunden werden, so daß dann, wenn ein Dachziegel angehoben wird, die gesamte Reihe mit angehoben werden muß. Dies ergibt eine noch höhere Abdecksicherheit bei Windangriff.

Es können selbstverständlich nicht nur Dachziegel sondern nahezu beliebige Formteile, wie z. B. ein T-Träger oder ein Doppel-T-Träger oder andere Formprofile, hergestellt werden. Die letztgenannten Formkörper können auch problemlos als Strangpreßprofile hergestellt werden. Es ist lediglich erforderlich, den Austritt des Extruders entsprechend zu gestalten.

Im Rahmen der Aufzählung der Vorteile bleibt schließlich noch die Tatsache zu erwähnen, daß durch die Verwendung des Gemisches von Kunststoffabfällen und Füllstoffen und deren Wiederverwertung die kommunalen Deponien in erheblichem Umfang entlastet werden.

Die Erfindung soll nachfolgend anhand der beigefügten Zeichnungen näher erläutert werden.

Es zeigen:
- Figur 1 bis 15: unterschiedliche Ausführungsformen von Dachziegeln
- Figur 16: in schematischer Darstellung Anlage zur Herstellung der Dachziegel
- Figur 17: weiteres Formteil im Querschnitt
- Figur 18: Dachpfanne in Teilperspektive

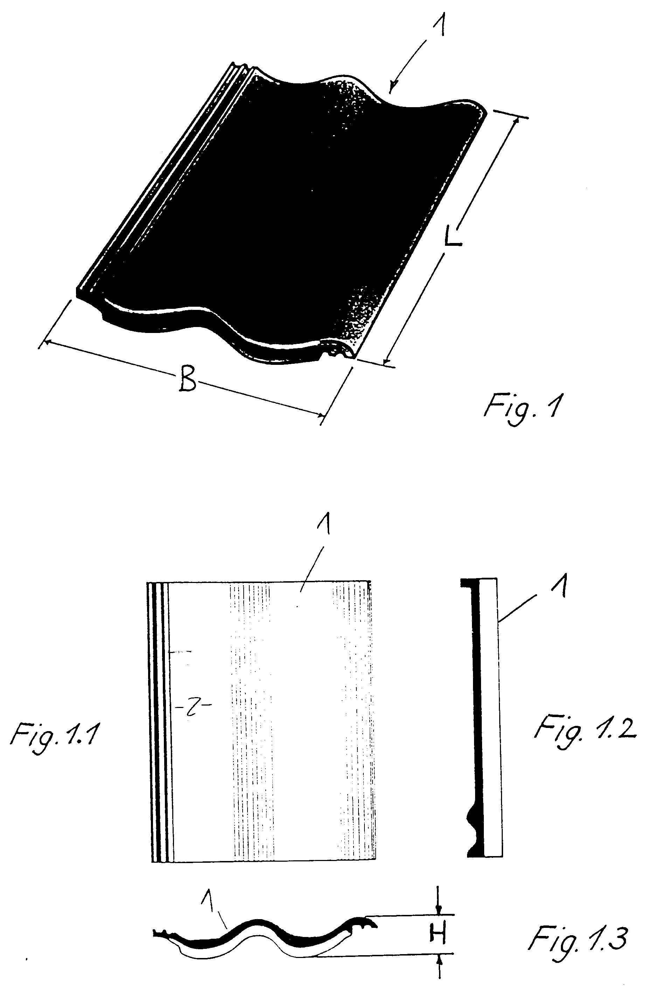

Die Dachziegel der Figuren 1 bis 15 weisen die ihrer jeweiligen Länge L, Breite B und Höhe H entsprechende Hauptabmessungen auf. Weitere Maßangaben entsprechen untergeordneten Abmessungen.

Die Figur 1 zeigt eine Flachdachpfanne 1, wie sie zur Abdeckung von Dächern mit verhältnismäßig geringer Dachneigung geeignet und gebräuchlich ist, in perspektivischer Ansicht. Die Figur 1.1 zeigt die Draufsicht, die Figur 1.2 die Seitenansicht und die Figur 1.3 schließlich die Vorderansicht der Flachdachpfanne 1. Die Oberfläche 2 der Flachdachpfanne 1 ist, wie man an den Figuren 1 und 1.3 deutlich erkennt, doppelt gewellt.

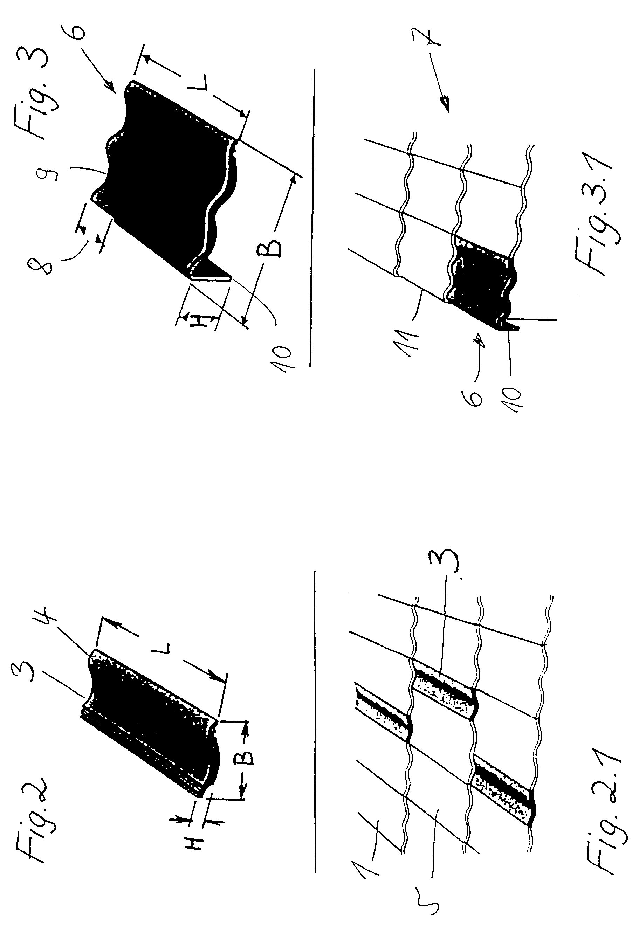

Die Figur 2 zeigt eine der Figur 1 ähnliche Flachdachpfanne 3 von geringerer Breite. Die Oberfläche 4 der Flachdachpfanne 3 ist demgegenüber nur einfach gewellt. Die Figur 2.1 zeigt einen Ausschnitt aus einem Dach 5, wo Flachdachpfannen 3 und Flachdachpfannen 1 gemeinsam verlegt sind.

Die Figur 3 zeigt eine Pfanne 6 für einen seitlichen, linken Dachabschluß (Ortgangziegel). Den Ausschnitt aus dem zugehörigen Dach 7 läßt Figur 3.1 erkennen. Die Pfanne 6 hat eine seitliche Einziehung 8 an ihrem oberen Ende 9, wo sie von dem heruntergezogenen Rand 10 des Nachfolgeziegels 11 überlappt wird.

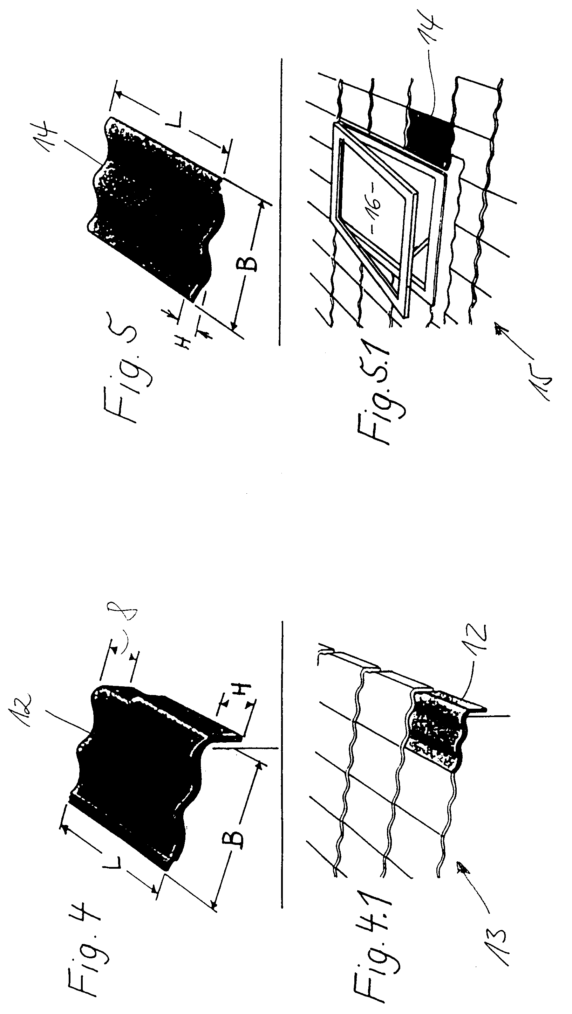

Die Figur 4 zeigt einen der Figur 3 entsprechenden Dachziegel 12 (Ortgangziegel) für einen rechtsseitigen Dachabschluß. Einen Ausschnitt aus einem solchen Dach 13 sieht man in der Figur 4.1.

In der Figur 5 ist eine Dachpfanne 14 wiedergegeben, wie sie zur Abdeckung eines Daches 15 seitlich neben einem Fenster 16 gebräuchlich ist. Letzteres ist in dem Ausschnitt des Daches 15 der Figur 5.1 zu sehen.

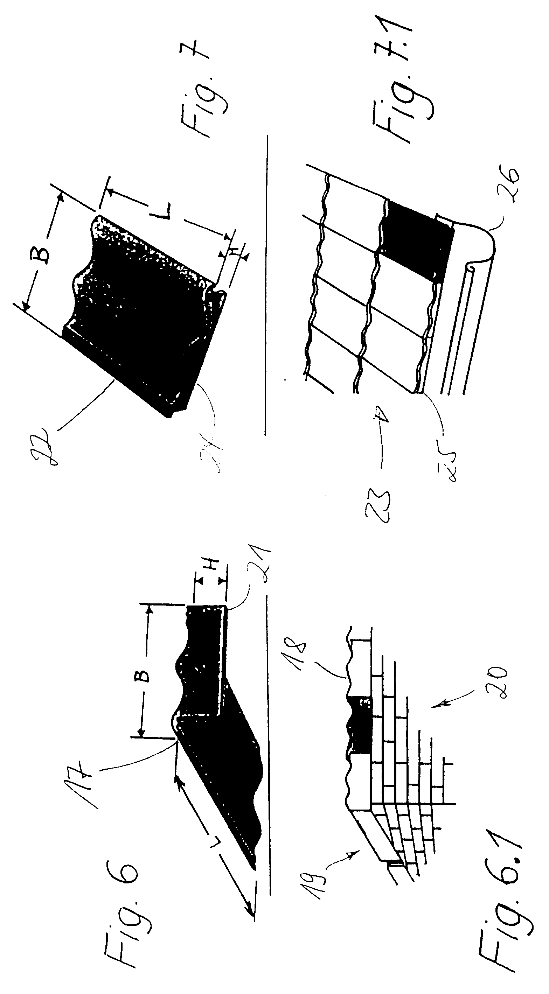

Die Figur 6 zeigt den Dachziegel 17 für den oberen Rand 18 eines flachen Daches 19. Von dem zugehörigen Gebäude ist in der Figur 6.1 eine Ecke 20 zu sehen. Der Dachziegel 17 hat einen weit heruntergezogenen oberen Rand 21.

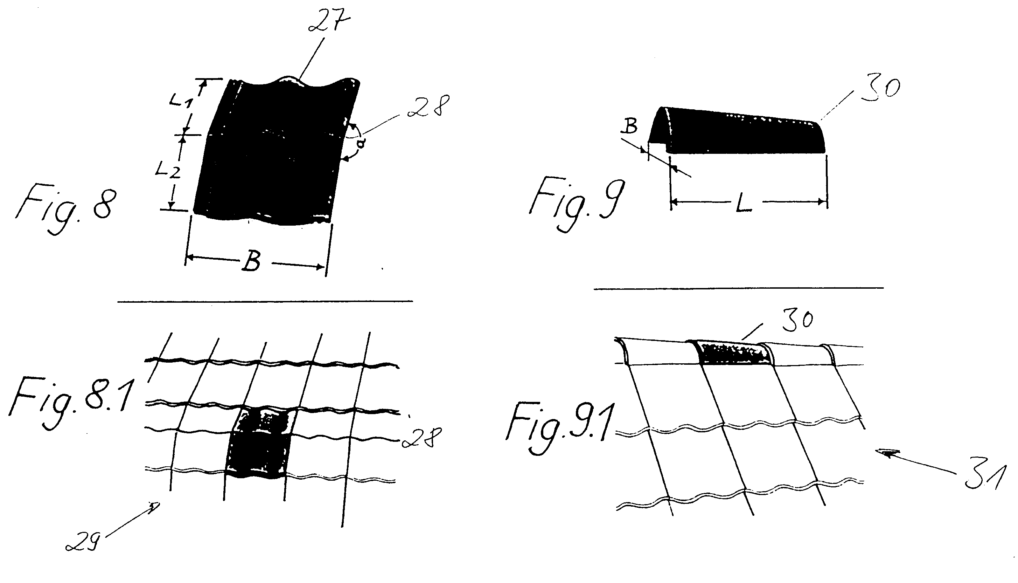

Die Figur 7 zeigt einen flachen Dachziegel 22, wie er als unterer Abschluß eines Daches 23 gebräuchlich ist. Der untere Rand 24 des Dachziegels 22 ist nach unten hin verlängert, so daß die Bildung eines Dachabschlusses 25 und Übergang in eine Dachrinne 26 geschaffen wird; letzteres ist aus der Figur 7.1 erkennbar.

In der Figur 8 ist ein abgewinkelter Dachziegel 27 erkennbar. Die Abwinklung um den Winkel α erfolgt längs einer Linie 28, welche den Dachziegel 27 in die beiden Teillängen L1 und L2 unterteilt, die beide etwa gleich lang sind. Der Dachziegel 27 dient beispielsweise zur Abdeckung eines Mansardendaches 29, von dem die Figur 8.1 einen Ausschnitt zeigt.

Die Figur 9 zeigt einen Firstziegel 30 und die Figur 9.1 den zugehörigen Ausschnitt aus einem Dachfirst 31.

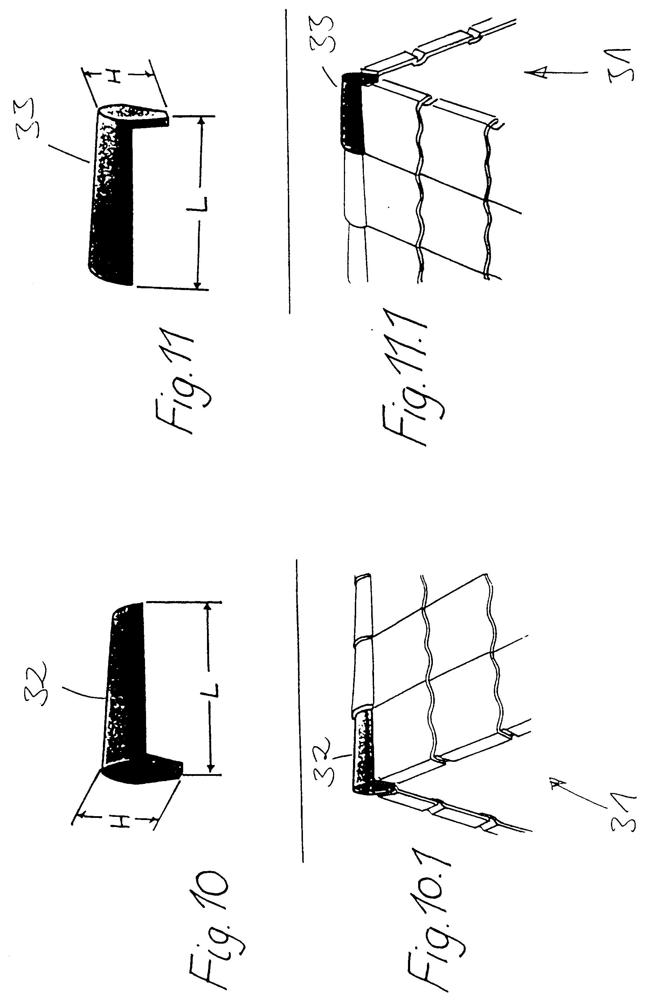

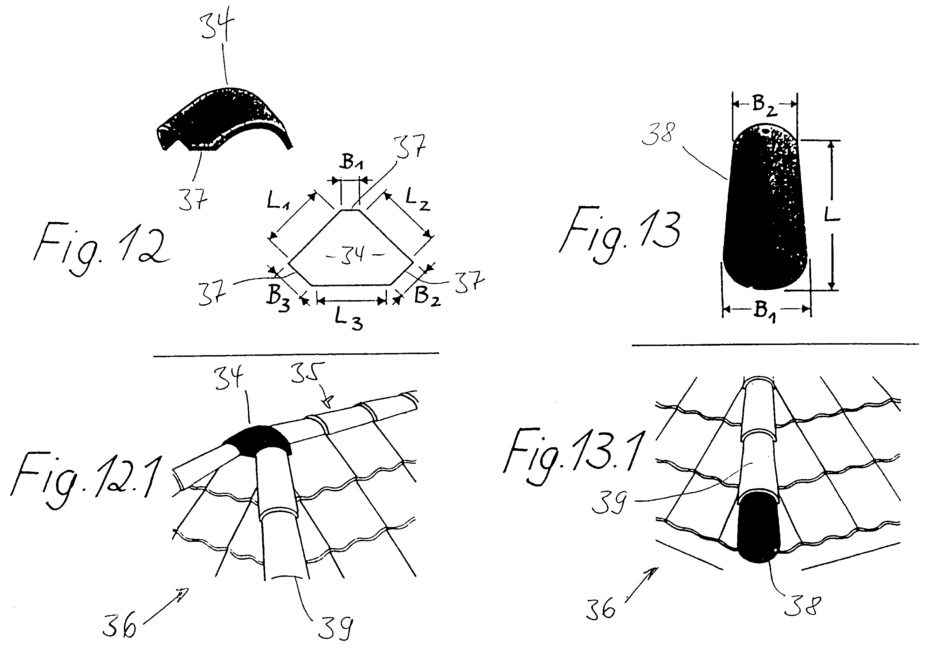

Die Figur 10 zeigt den Firstziegel 32 für den linksseitigen Abschluß eines Dachfirsts 31, während die Figur 11 den Firstziegel 33 für den rechtsseitigen Abschluß eines Dachfirstes 31 wiedergibt. Die Dachfirste 31 sind in den zugehörigen Ausschnitten der Figuren 10.1 und 11.1 zu erkennen.

Die Figur 12 zeigt die Abschlußkappe 34 für den First 35 einer Walmgaupe 36, von der in der Figur 12.1 der zugehörige Ausschnitt zu sehen ist. Die Abschlußkappe 34 hat die drei Kantenlängen L1, L2 und L3 mit den dazwischen liegenden Übergangsabschnitten 37 mit den jeweiligen Breiten B1, B2 und B3. Die Kantenlängen L1, L2 und L3 sowie die Breiten B1, B2 und B3 sind jeweils etwa gleich lang, wie das auch in dem rechten Teil der Figur 12 erkennbar ist.

In der Figur 13 ist der untere Abschlußziegel 38 einer Firstgaupe 39 zu erkennen, wie er sich beispielsweise als unterer Abschluß einer Walmgaupe 36 darbietet. Der Abschlußziegel 38 hat die beiden unterschiedlichen Breiten B 1 und B 2. Der Ausschnitt aus dem unteren Eckteil einer Walmgaupe 36 ist in der Figur 13.1 zu sehen.

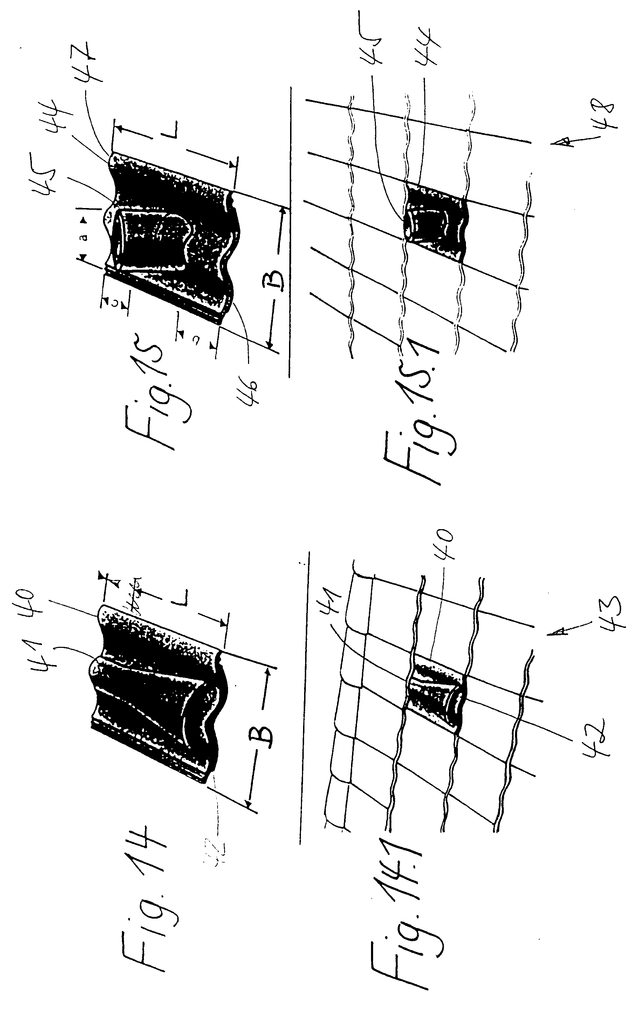

Die Figur 14 zeigt eine flache Dachpfanne 40, die mit einem Aufsatz 41 versehen ist, der nach unten hin eine Öffnung 42 aufweist. Die Dachpfanne 40 dient zur Belüftung einer Dachkonstruktion 43, von der in der Figur 14.1 ein Ausschnitt gezeigt ist.

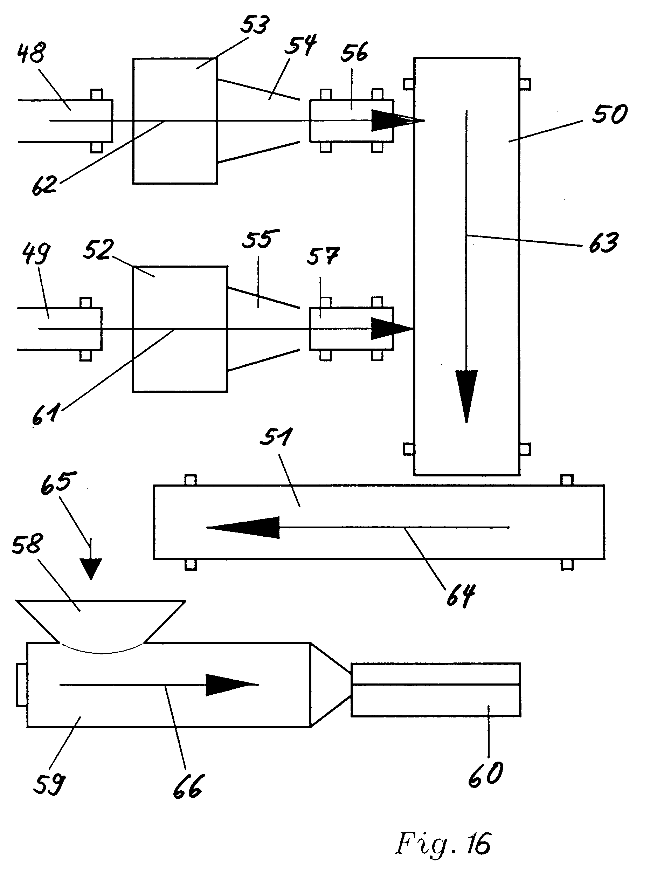

In der Figur 15 schließlich ist eine Dachpfanne 44 gezeigt, welche eine Durchführung 45 für einen Antennenmast oder ein Dunstrohr (nicht gezeigt) aufweist. Die Durchführung 45 hat den Durchmesser "a". Die jeweiligen Abstände "b" und "c" vom unteren Rand 46 bzw. oberen Rand 47 der Dachpfanne 44 sind in der Figur 15 angedeutet, wobei diese Abstände "b" und "c" gleichgroß oder unterschiedlich groß sein können. Die Anordnung der Dachpfanne 44 unterhalb einer Dachkonstruktion 48 zeigt die Figur 15.1. Die Durchführung 45 hat einen runden Querschnitt.

Die in den Figuren 1 bis 15 gezeigten Ausführungsbeispiele bilden nur einen Ausschnitt aus den vielfältigen Möglichkeiten zur Ausgestaltung von Dachziegeln aus den beschriebenen Kunststoffe und Füllstoffe enthaltenden Abfällen.

Für die mit dem Verlegen der erfindungsgemäßen Dachziegel betrauten Dachdecker bieten diese eine Reihe von besonderen Vorteilen, die nachfolgend aufgezählt seien:
- gleiche Dachkonstruktion,
- gleiche Verlegegetechnik wie bei aus Ton oder tonhaltigen Massen gebrannten oder aus Beton gegossenen Dachziegeln,
- leichte Bearbeitung z. B. mit Hilfe von Stichsägen,
- keine Verletzungsgefahr durch scharfe Kanten,
- kein Bruch beim Lagern, Transport und Verlegen,
- genaues Verlegen aufgrund geringer Fertigungstoleranzen,
- durch das genaue Verlegen bedingt verringertes Risiko der ungewollten Dachabdeckung durch Sturm,
- preisgünstiges und dauerhaftes Produkt aus wiederverwendeten Abfallstoffen,
- Begehbarkeit und Abkippbarkeit ohne Bruchrisiko.

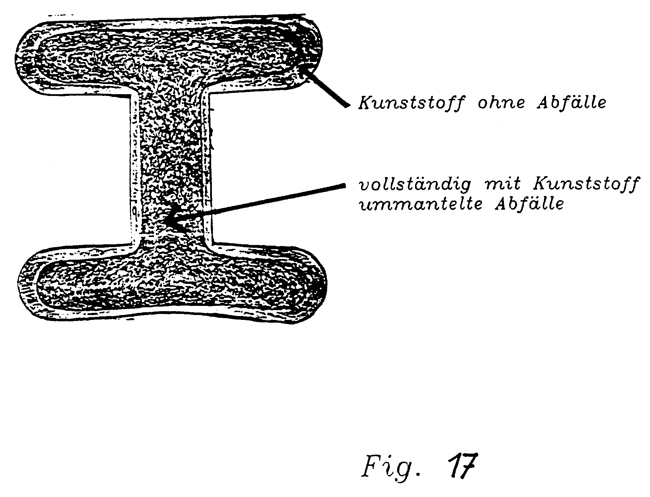

Die Figur 16 zeigt in schematischer Darstellung eine Anlage zur Herstellung der Dachziegel und die Figur 17 zeigt einen Querschnitt durch ein als Doppel-T-Träger ausgebildetes Formteil. als Doppel-T-Träger ausgebildet ist.

Von einem Förderband 48 werden unsortierte Altkunststoffe, wie z.B. Kunststoffflaschen von Waschmitteln oder Weichspülern oder ähnlichem in die Zerkleinerungsanlage 53 gegeben, die als sogen. Schredder ausgebildet sein kann. Die Zerkleinerungsanlage 53 führt die gewünschte Zerkleinerung durch, wobei das zerkleinerte Produkt über den Aufgabetrichter 54 auf ein weiteres Förderband 56 fällt, so daß eine Förderrichtung in Richtung des Pfeils 62 entsteht. Vom Förderband 56 wird das zerkleinerte Material auf ein Förderband 50 übergeben, um von diesem Förderband 50 in Richtung des Pfeils 63 transportiert zu werden. Mit der Zerkleinerungsanlage 53 können nicht nur unsortierte Altkunststoffe, sondern bei Bedarf auch andere Füllstoffe, wie z.B. Holz oder Papier, zerkleinert werden. Dies hängt ganz davon ab, womit die Zerkleinerungsanlage 53 beschickt wird. Es ist dann, wenn die Zerkleinerungsanlage 53 mit unterschiedlichen Materialien beschickt werden soll, erforderlich, daß diese Materialien jeweils zunächst in einen nicht näher dargestellten Zwischenspeicher geführt und von dort in einem gewünschten Verhältnis auf das Förderband 50 aufgegeben werden oder zunächst in einem gewünschten Verhältnis miteinander vermischt und sodann auf das Förderband 50 aufgegeben werden. Es ist aber auch denkbar, für andere Stoffe eine oder mehrere weitere Zerkleinerungseinrichtungen 52 vorzusehen, die von einem Förderband 49 beschickt werden können. Auch von dort wird das zerkleinerte Gut wieder über den Aufgabetrichter 55 auf ein weiteres Förderband 57 gegeben, so daß auch hier wieder eine Förderrichtung in Richtung des Pfeils 61 entsteht. Das Förderband 57 übergibt das zerkleinerte Gut an das Förderband 50. Eine jeweilige und hier nicht näher dargestellte Mengenkontrolle sorgt dafür, daß die Stoffe in den gewünschten Verhältnissen dem Förderband aufgegeben werden. Das Förderband 50 fördert nun diese Stoffe in Richtung des Pfeils 63 auf das Förderband 51, das seinerseits diese Stoffe in Richtung des Pfeils 64 transportiert, worauf diese Stoffe am Ende des Förderbandes 51 in Richtung des Pfeils 65 in den Einfülltrichter 58 eines Extruders 59 fallen und vom Extruder übernommen und von der Extruderschnecke in Richtung des Pfeils 66 transportiert und hierbei gepreßt und erhitzt werden. Die Erhitzung allein durch die Verpressung in der Extruderschnecke kann ausreichen. Es kann jedoch auch in bekannter Weise eine gesonderte Heizung vorgesehen sein. Im Extruder 59 wird das Gemenge aus Kunststoff und Füllstoff verpreßt und hierbei evtl. unter Einsatz der zusätzlichen Heizung der Kunststoff breiig oder flüssig, so, daß er am Ende des Extruders in eine Form 60 transportiert werden kann.

Bei der Anlage nach Figur 16 ist vom Grundaufbau her lediglich erforderlich, daß das aus den Zerkleinerungseinrichtungen austretende, zerkleinerte Gut in irgendeiner Weise in den Extruder gelangt und von dort in eine Form zur Herstellung der angestrebten Formteile. Die Art und Weise des Transportes und die zugehörigen Transportmittel, um dies zu bewerkstelligen, sind von sekundärer Bedeutung.

In den Zerkleinerungsanlagen 53 bzw. 52 können Kunststoffe zusammen mit den daran anhaftenden Verbundstoffen zerkleinert werden. Die so zerkleinerten Teile, die aus Kunststoff und Verbundwerkstoff bestehen, können ohne Trennung des Verbundwerkstoffes in den Extruder 59 eingebracht werden.

Stellt die Form 60 eine Form zur Herstellung eines Doppel-T-Profiles dar, so entsteht ein Doppel-T-Profil mit einem Querschnitt nach Figur 17. Überraschenderweise ist, ohne daß eine Coextrusion angewendet worden wäre, ein Profil entstanden mit einer äußeren, umhüllenden Wandung mit einer Dicke von mehr als 1 mm, die ausschließlich aus Kunststoff besteht und keine Füllstoffe enthält. Der von dieser Wand umschlossene Hohlraum ist aufgefüllt mit Füllstoff und Kunststoff, wobei die zerkleinerten Füllstoffstücke jeweils vollständig von Kunststoff umschlossen sind. Der Kunststoff umhüllt somit die Füllstoffteile und verbindet sich untereinander und mit der Außenwand im breiigen Zustand und härtet sodann aus. Es entsteht ein sehr widerstandsfähiges Formteil mit einer glatten und beliebig einfärbbaren Oberfläche, das in Wasser nicht oder nicht nennenswert quillt und nur eine Wasseraufnahme von 0,03 bis 0,04 % zeigt. Mit der Menge des Füllstoffs und der Zusammensetzung des Füllstoffs nach der Materialart können die elastischen Eigenschaften des Formteils beeinflußt werden. Beobachtungen haben gezeigt, daß evtl. PVC-Bestandteile während der Extrudierung kein Chlorgas nach außen abgeben können, sondern daß vielmehr evtl. austretendes Chlorgas von dem Thermoplast vollständig eingeschlossen und festgehalten wird. Jedenfalls kann am Extruder ein Entweichen von Chlorgas trotz im Extruder vorhandener PVC-Bestandteile (z. B. 1 % der Gesamtmasse) nicht beobachtet werden.

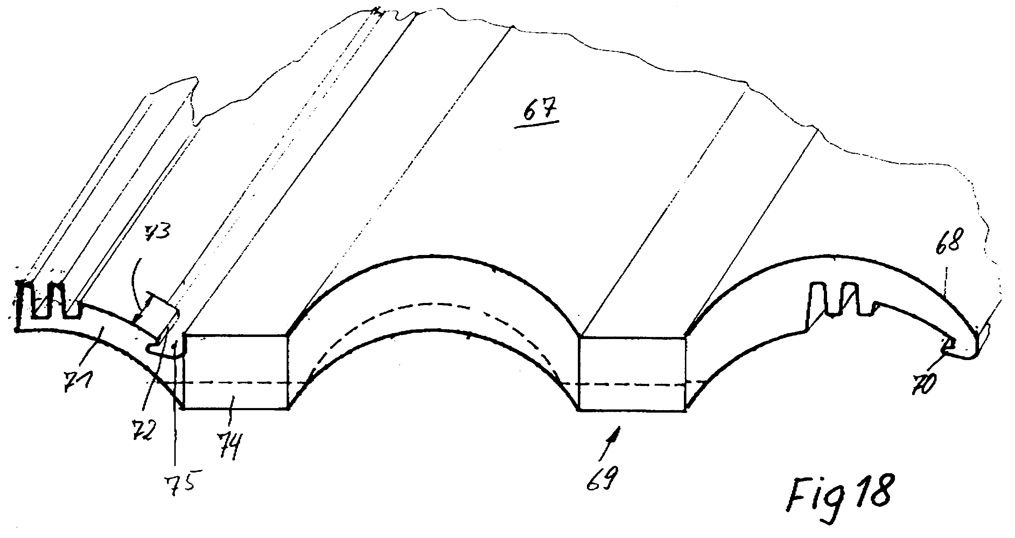

Es gelingt somit, aus Abfallstoffen, deren Wiederverwertung oder Entsorgung problematisch war, auf sehr preisgünstige Art und Weise ein wirtschaftlich hochwertiges Produkt herzustellen. Ein besonderes Beispiel hierzu ist die Dachpfanne 67 nach Figur 18. Diese Dachpfanne 67 könnte ansich zu den beschriebenen verschiedenen Dachpfannen nach den Figuren 1 bis 15 gezählt werden. Es soll jedoch hier bei der nach Figur 18 hergestellten Dachpfanne 67 auf eine Besonderheit hingewiesen werden. Diese Dachpfanne 67, die nicht vollständig dargestellt ist, sondern von der lediglich das aufliegende Ende 69 dargestellt ist, weist an ihrer rechten Längsseite einen Übergriff 68 auf, der ein entsprechendes Auflageteil 71 an der Längsseite einer benachbarten Pfanne übergreift. Dieses Auflageteil 71 weist natürlich jede einzelne Dachpfanne und so auch die dargestellte Dachpfanne 67 an ihrer linken Längsseite auf. Dieses Auflageteil 71 ist von einem benachbarten Tragstück 74 durch eine längs sich über die gesamte Pfannenlänge erstreckende Nut 75 getrennt. Am aufliegenden Ende 67 setzt sich jedoch der Auflageteil 71 in einer Nase 72 fort, die in Querrichtung einen Teil der Nut 75 überdeckt und eine Länge 73 aufweist. Diese Länge 73 kann in Relation zur Länge der Dachpfanne sehr kurz sein.

Am seitlichen Längsrand des Übergriffs 68 weist dieser unten eine Hintergriffnase 70 auf, die in ihrer Länge der Länge 73 entsprechen kann. Diese Abmessungen der Hintergriffnase 70, der Nase 72 und der Nut 75 sind so gewählt, daß beim Einsetzen einer benachbarten Pfanne diese mindestens um den Betrag 73 nach oben versetzt aufgelegt wird, so daß die Nase 70 in die Nut 75 eintauchen kann. Sodann wird diese benachbarte Dachpfanne um den Betrag 73 nach unten verschoben, so daß nunmehr die Hintergriffnase 70 die Nase 72 untergreift. Hierdurch sind alle Dachpfannen einer Reihe miteinander verbunden, so daß nicht eine einzelne Dachpfanne angehoben werden kann, sondern mit dem Anheben einer einzelnen Dachpfanne immer die gesamte Reihe folgt. Dies bedeutet eine zusätzliche Abdecksicherheit insbesondere bei Windangriff.

### Liste der verwendeten Bezugszeichen

- 1: Flachdachpfanne
- 2: Oberfläche, doppelt gewellt
- 3: Flachdachpfanne
- 4: Oberfläche, einfach gewellt
- 5: Dach
- 6: Pfanne
- 7: Dach
- 8: seitliche Einziehung
- 9: oberes Ende
- 10: heruntergezogener Rand
- 11: Nachfolgeziegel
- 12: Dachziegel
- 13: Dach
- 14: Dachpfanne
- 15: Dach
- 16: Fenster
- 17: Dachziegel
- 18: Rand eines flachen Daches
- 19: flaches Dach
- 20: Ecke eines Gebäudes
- 21: heruntergezogener oberer Rand
- 22: flacher Dachziegel
- 23: Dach
- 24: unterer Rand
- 25: Dachabschluß
- 26: Dachrinne
- 27: abgewinkelter Dachziegel
- 28: Teilungslinie
- 29: Mansardendach
- 30: Firstziegel
- 31: Dachfirst
- 32: Firstziegel
- 33: Firstziegel
- 34: Abschlußkappe
- 35: First
- 36: Walmgaupe
- 37: Übergangsabschnitt
- 38: unterer Abschlußziegel
- 39: Firstraupe
- 40: Dachpfanne
- 41: Aufsatz
- 42: Öffnung
- 43: Dachkonstruktion
- 44: Dachpfanne
- 45: Durchführung
- 46: unterer Rand
- 47: oberer Rand
- 48: Förderband
- 49: Förderband
- 50: Förderband
- 51: Förderband
- 52: Zerkleinerungseinrichtung
- 53: Zerkleinerungsanlage
- 54: Aufgabetrichter
- 55: Aufgabetrichter
- 56: Förderband
- 57: Förderband
- 58: Einfülltrichter
- 59: Extruder
- 60: Form
- 6: 1 Pfeil
- 62: Pfeil
- 63: Pfeil
- 64: Pfeil
- 65: Pfeil
- 66: Pfeil
- 67: Dachpfanne
- 68: Übergriff
- 69: aufliegendes Ende
- 70: Hintergriffnase
- 71: Auflageteil
- 72: Nase
- 73: Länge
- 74: Tragstück
- 75: Nut

## Patentansprüche

1. Formteil mit einer die äußere Oberfläche bildenden Kunststoffhaut, die einen mit zerkleinerten Füllstoffen und Kunststoff gefüllten Raum umschließt, dadurch gekennzeichnet,
- daß die Füllstoffe partikelweise alle vollständig von Kunststoff ummantelt sind;
- daß der innere Kunststoff und die die äußere Oberfläche bildende Kunststoffhaut miteinander verbunden sind; und
- daß in der mehr als 1 mm dicken Kunststoffhaut keinerlei Füllstoffpartikel vorhanden sind.

2. Formteil nach Anspruch 1, dadurch gekennzeichnet, daß das Formteil bei gleichen Abmessungen und zumindest annähernd gleichem Gewicht die einem aus Ton oder tonhaltigen Massen gebrannten oder aus Beton gegossenen Dachziegel (1,3,6,11,12,14,17,22,27,30,32,33,34,38, 40,44) entsprechende Formgestalt aufweist.

3. Formteil nach Anspruch 2, dadurch gekennzeichnet, daß der Dachziegel nach einer der nachfolgenden Formen ausgestaltet ist, nämlich als
- Flachziegel wie Bieberschwanz,
Schwalbenschwanz,
Turmziegel,
oder als
- Hohlziegel wie Mönch- und Nonnenziegel,
Hohlpfanne (1,3,14,40,44)
Rechts- oder Linkspfanne (6,12)
Krempziegel,
First- oder Gratziegel (30,32,33,38)
Falzziegel (27)
oder als
- Sonderform wie Firstanschlußziegel (17)
Gaupenziegel (34),
Ortziegel (6, 12,9)
Traufziegel (22),
Kehlziegel oder
Rinnenkehlziegel

4. Formte nach Anspruch 2 oder 3, dadurch gekennzeichnet, daß die Dachpfanne (67) an einer Seite einen sich über die ganze Länge erstreckenden Übergriff (68) aufweist, der, beginnend am aufliegenden Ende (69) auf der Unterseite eine sich über einen kleinen Teil der Länge der Dachpfanne (67) erstreckende Hintergriffnase (70) aufweist, der an der anderen Längsseite der Dachpfanne (67) am Auflageteil für den Übergriff (68) eine Nase (72) entsprechender Länge (73) zugeordnet ist.

## Claims

1. A molded part comprising a plastic skin that forms the outer surface, enclosing a space filled with disintegrated fillers and plastic, wherein:
- the filing materials are completely encapsulated, particle for particle, in plastic;
- the plastic inside and the plastic skin that forms the outer surface are interconnected, and;
- there are no particles of filler in the plastic skin, which is more than 1 mm thick.

2. A molded part as claimed in Claim 1 wherein a molded part with the same dimensions and at least approximately the same weight as a roofing tile made of fired clay or clayey mixtures or cast concrete (1, 3, 6, 11, 12, 14, 17, 22, 27, 30, 32, 33, 34, 38, 40, 44) evidences a corresponding shape.

3. A molded part as claimed in Claim 2 wherein the roofing tile assumes one of the following forms, namely
- flat tiles such as plain tiles
dovetail tiles
tower tile,
- or hollow tiles such as over tiles and under tiles
pantiles (1, 3, 14, 40, 44)
right- or left-hand pantiles (6, 12)
flap tiles,
ridge tiles (30, 32, 33, 38)
interlocking tiles (27)
- or special forms such as ridge course tiles (17)
hip tiles (34),
gable tiles (6, 12, 9)
eaves tiles (22),
valley tiles or
gutter tiles.

4. A molded part as claimed in Claim 2 or 3 wherein the flat interlocking tile (67) has on one side an overhang (68), which extends along its entire length and has an interlocking knob (70) that extends, starting at the resting end (69) on the bottom, along a small part of the length of the flat interlocking tile (67) and which is matched to a knob (72) of corresponding length (73) on the supporting part for the overhang (68) on the other longitudinal side of the flat interlocking tile (67).

## Revendications

1. Pièce moulée avec une enveloppe de matière plastique constituant la surface extérieure et renfermant un espace rempli de matières plastiques et de charges broyées, caractérisée par le fait
- que toutes les charges, particule par particule, sont complètement enveloppées par de la matière plastique;
- que la matière plastique intérieure et l'enveloppe de matière plastique constituant la surface extérieure sont liées entre elles; et
- qu'aucune particule de charge n'est contenue dans l'enveloppe de matière plastique dont l'épaisseur est supérieure à 1 mm.

2. Pièce moulée selon la revendication 1, caractérisée par le fait que la pièce moulée, les dimensions étant identiques et le poids du moins approximativement identique, présente une forme correspondant à une tuile cuite en argile, ou en matières contenant de l'argile, ou coulée en béton (1, 3, 6, 11, 12, 14, 17, 22, 27, 30, 32, 33, 34, 38, 40, 44).

3. Pièce moulée selon la revendication 2, caractérisée par le fait que la tuile est formée selon les exécutions suivantes, à savoir comme
- tuile plate comme tuile à crochet,
queue d'aronde,
tuile de tour,
ou comme
- tuile creuse comme tuile à canal du dessus et du dessous,
tuile creuse sans emboîtement (1, 3, 14, 40, 44)
tue en S droite ou gauche (6, 12)
tuile droite recourbée
tuile faîtière ou nouette (30, 32, 33, 38)
tuile à emboîtement (27)
ou comme
- forme spéciale comme tuile arêtière (17)
tuile de lucarne (34)
tuile de rive (6, 12, 9)
tuile de gouttière (22)
noue ou
noue de gouttière

4. Pièce moulée selon les revendications 2 ou 3, caractérisée par le fait que la tuile en S (67) présente sur un côté un recouvrement (68) s'étendant sur toute la longueur qui, en commençant à l'extrémité en saillie (69), présente sur la partie inférieure un tenon (70) s'étendant sur un petit segment de la longueur de la tuile en S (67) auquel un tenon (72) de longueur correspondante (73) est adjoint de l'autre côté longitudinal de la tuile en S (67) au niveau de l'élément de support prévu pour le recouvrement (68).
